# EUROPEAN PATENT APPLICATION

(11) **EP 4 163 863 A1**
(43) Date of publication of application: **12.04.2023**
(21) Application number: 21817266.6
(22) Date of filing: 18.05.2021
(51) Int. Cl.: G06Q 50/10

(54) **PROGRAM, INFORMATION PROCESSING METHOD, AND INFORMATION PROCESSING DEVICE**

(30) Priority: 05.06.2020 JP 2020098354
(71) Applicant: Daikin Industries, Ltd., Osaka-shi, Osaka 530-8323 (JP)
(72) Inventor: KITA, Kenji, Osaka-shi, Osaka 530-8323 (JP)
(74) Representative: Hoffmann Eitle
(86) International application number: PCT/JP2021/018739
(87) International publication number: WO 2021/246156

(57) **Abstract**

To provide a technology by which the operation cost of a function using a cloud service can be properly identified. A computer is caused to execute a calculating process of calculating a usage fee for using a cloud service by at least one of a first function or a second function, based on first information indicating a relationship of input/output between a first service and a second service that are used by the first function and provided by the cloud service, and second information indicating a relationship of input/output between the first service and a third service that are used by the second function and provided by the cloud service.

## Description

### [Technical Field]

The present disclosure relates to a program, an information processing method, and an information processing apparatus.

### [Background Art]

Conventionally, technologies for constructing systems by using cloud services (public cloud services) have been known (see, e.g., Patent Literature 1).

### [Citation List]

### [Patent Literature]

[PTL 1]
Japanese Laid-Open Patent Application No. 2018-170715

### [Summary of Invention]

### [Technical Problem]

However, the conventional technology has a problem that, for example, when a system is constructed by using a cloud service, the operation cost for each function (service) provided in the system may not be properly identified. The purpose of the present disclosure is to provide a technology by which the operation cost of a function using a cloud service can be properly identified.

### [Solution to Problem]

A program according to aspect 1 of the present disclosure causes a computer to execute a calculating process of calculating a usage fee for using a cloud service by at least one of a first function or a second function, based on first information indicating a relationship of input/output between a first service and a second service that are used by the first function and provided by the cloud service, and second information indicating a relationship of input/output between the first service and a third service that are used by the second function and provided by the cloud service. Accordingly, the operation cost of a function using a cloud service can be properly identified.

Aspect 2 of the present disclosure is the program according to aspect 1, wherein the calculating process includes calculating the usage fee for using the cloud service by the first function, based on the first information, the second information, and a usage fee for using each of multiple services provided by the cloud service.

Aspect 3 of the present disclosure is the program according to aspect 1 or 2, wherein the calculating process includes calculating the usage fee for using the cloud service by the first function, based on information of a fee list of each of the first service and the second service, and a usage amount of each of the first service and the second service used by the first function.

Aspect 4 of the present disclosure is the program according to any one of aspects 1 to 3, wherein the calculating process includes calculating the usage fee for using the cloud service by the first function, based on a usage fee for using the first service, a usage amount of the first service used by the first function, and a usage amount of the first service used by the second function.

Aspect 5 of the present disclosure is the program according to any one of aspects 1 to 4, wherein the calculating process includes calculating the usage fee for using the cloud service by the first function, based on a usage fee for using the first service, a usage fee for using the second service by the first function, and a usage fee for using the third service by the second function.

Aspect 6 of the present disclosure is the program according to any one of aspects 1 to 5, wherein the program causes the computer to execute an output process of outputting a warning, in response to determining that the calculated usage fee for using the cloud service by the first function is greater than or equal to a threshold.

Aspect 7 of the present disclosure is the program according to any one of aspects 1 to 6, wherein the program causes the computer to execute a presenting process of presenting a configuration of the second service by which the usage fee for using the cloud service by the first function becomes less than a threshold, in response to determining that the calculated usage fee for using the cloud service by the first function is greater than or equal to the threshold.

Aspect 8 of the present disclosure is the program according to any one of aspects 1 to 7, wherein the calculating process includes calculating a predicted usage fee of the usage fee for using the cloud service by the first function, based on at least one of a number of users or a number of devices using the first function input by a user, and information of a fee list of each of the first service and the second service.

Aspect 9 of the present disclosure is the program according to aspect 8, wherein the calculating process includes determining a grade of at least one of the first service or the second service, based on at least one of the number of users or the number of devices using the first function input by the user, and calculating the predicted usage fee of the usage fee for using the cloud service by the first function, based on the information of the fee list of the determined grade.

Aspect 10 of the present disclosure is the program according to any one of aspects 1 to 9, wherein the program causes the computer to execute an output process of outputting a warning, in response to determining that a rate of deviation between a calculated actual usage fee and a predicted usage fee of the usage fee for using the cloud service by the first function, is greater than or equal to a threshold.

Aspect 11 of the present disclosure is the program according to any one of aspects 1 to 10, wherein the first service is charged based on a first unit price with respect to a usage amount that is less than or equal to a first threshold, and is charged based on a second unit price that is lower than the first unit price with respect to a portion of the usage amount exceeding the first threshold, and the program causes the computer to execute an output process of outputting information based on a reduced fee corresponding to a usage fee for using the first service by the second function that is reduced due to the first function, in response to determining that a usage amount of the first service used by the first function and the second function exceeds the first threshold.

Aspect 12 of the present disclosure is the program according to any one of aspects 1 to 11, wherein the first service is charged based on a first unit price with respect to a usage amount that is less than or equal to a first threshold, and is charged based on a second unit price that is lower than the first unit price with respect to a portion of the usage amount exceeding the first threshold, and the calculating process includes calculating a predicted usage fee of the usage fee of using the cloud service by the first function, based on the second unit price, with respect to a portion of a usage amount exceeding the first threshold of the first service used by the first function and the second function, among a usage amount of the first service used by the first function.

Aspect 13 of the present disclosure is the program according to any one of aspects 1 to 12, wherein the first service is not charged with respect to a usage amount that is less than or equal to a second threshold, and the program causes the computer to execute an output process of outputting information based on an increased fee corresponding to a usage fee for using the first service by the second function that is increased due to the first function, in response to determining that a usage amount of the first service used by the first function and the second function exceeds the second threshold.

Aspect 14 of the present disclosure is the program according to any one of aspects 1 to 12, wherein the first service is not charged with respect to a usage amount that is less than or equal to a second threshold, and is charged based on a third unit price with respect to a portion of the usage amount that exceeds the second threshold, and the calculating process includes calculating a predicted usage fee of the usage fee of using the cloud service by the first function, based on the third unit price, with respect to the portion of a usage amount exceeding the second threshold of the first service used by the first function and the second function, among a usage amount of the first service used by the first function.

Aspect 15 of the present disclosure is an information processing method performed by an information processing apparatus, to execute a calculating process of calculating a usage fee for using a cloud service by at least one of a first function or a second function, based on first information indicating a relationship of input/output between a first service and a second service that are used by the first function and provided by the cloud service, and second information indicating a relationship of input/output between the first service and a third service that are used by the second function and provided by the cloud service.

Aspect 16 of the present disclosure is an information processing apparatus including a calculating unit configured to calculate a usage fee for using a cloud service by at least one of a first function or a second function, based on first information indicating a relationship of input/output between a first service and a second service that are used by the first function and provided by the cloud service, and second information indicating a relationship of input/output between the first service and a third service that are used by the second function and provided by the cloud service.

### [Brief Description of Drawings]

[FIG. 1] FIG. 1 illustrates an example of a system configuration of a communication system according to an embodiment.
[FIG. 2] FIG. 2 illustrates an example of the hardware configuration of an information processing apparatus, a server, a terminal, and a device according to the embodiment.
[FIG. 3] FIG. 3 illustrates an example of the functional configuration of the information processing apparatus according to the embodiment.
[FIG. 4] FIG. 4 is a sequence diagram illustrating an example of processing in the remote control function according to the embodiment.
[FIG. 5] FIG. 5 is a diagram illustrating an example of information stored in the device DB according to the embodiment.
[FIG. 6] FIG. 6 is a sequence diagram illustrating an example of processing in a remote monitor function according to the embodiment.
[FIG. 7] FIG. 7 is a flowchart illustrating an example of processing of the information processing apparatus according to the embodiment.
[FIG. 8] FIG. 8 is a diagram illustrating an example of information included in design data according to the embodiment.
[FIG. 9] FIG. 9 is a diagram illustrating an example of the information included in fee list data according to the embodiment.
[FIG. 10] FIG. 10 is a diagram illustrating an example of the information included in the actual data according to the embodiment.
[FIG. 11] FIG. 11 illustrates an example of the display screen of the information processing apparatus according to the embodiment.

### [Description of Embodiments]

Each embodiment will be described below with reference to the drawings. In the present specification and the drawings, elements having substantially the same functional configuration are denoted by the same reference numerals, thereby omitting overlapping descriptions.

### <System configuration>

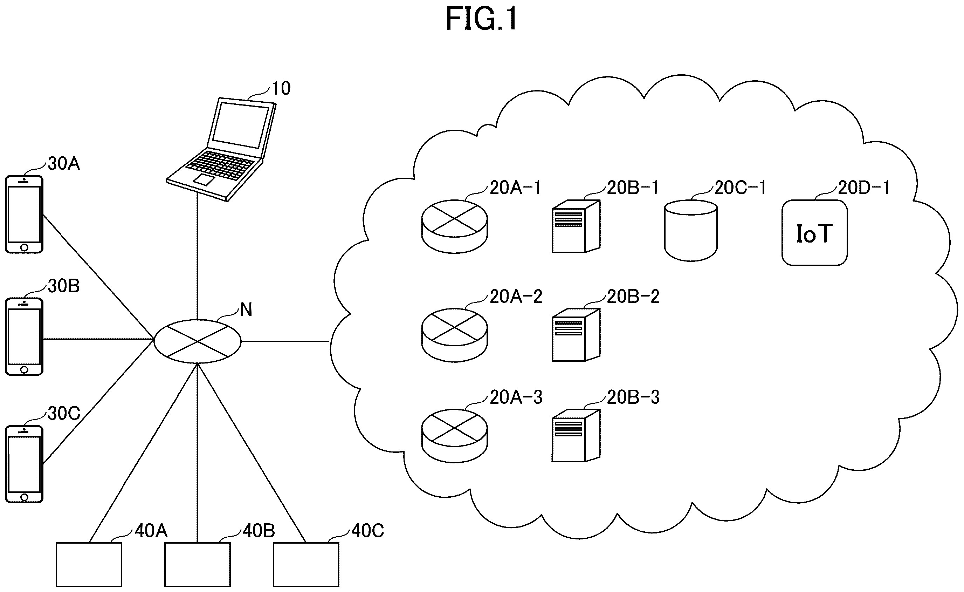

First, the system configuration of a communication system 1 is described. FIG. 1 illustrates an example of the system configuration of the communication system 1 according to the embodiment. As illustrated in FIG. 1, the communication system 1 includes an information processing apparatus 10. Further, the communication system 1 includes servers 20A-1, 20A-2, 20A-3, ··· (hereafter, when it is not necessary to distinguish between these, these are simply referred to as the "server 20A"), servers 20B-1, 20B-2, 20B-3, ··· (hereafter, when it is not necessary to distinguish between these, these are simply referred to as the "server 20B".), servers 20C-1, ··· (hereafter, when it is not necessary to distinguish between these, these are simply referred to as the "server 20C"), and servers 20D-1, ··· (hereafter, when it is not necessary to distinguish between these, these are simply referred to as the "server 20D"). In the following, when it is not necessary to distinguish between the server 20A, the server 20B, the server 20C, and the server 20D, these are simply referred to as the "server 20".

The communication system 1 also includes a terminal 30A, a terminal 30B, and a terminal 30C, ··· (hereafter, when it is not necessary to distinguish between these, these are simply referred to as the "terminal 30").

Further, the communication system 1 includes a device 40A, a device 40B, and a device 40C, ··· (hereafter, when it is not necessary to distinguish between these, these are simply referred to as the "device 40"). The number of each of the information processing apparatuses 10, the servers 20, the terminals 30, and the devices 40 is not limited to the example in FIG. 1.

The information processing apparatus 10, the server 20, the terminal 30, and the device 40 may be connected so as to be able to communicate with each other via a network NW (an example of a "second network") such as the Internet, a wireless LAN (Local Area Network), and a mobile phone network, for example. The mobile phone network may include, for example, wireless communication systems such as LTE (Long Term Evolution) and 5G (5th Generation Mobile Communications System).

The information processing apparatus 10 may be, for example, a personal computer or a computer for a server. The information processing apparatus 10 may be operated by, for example, a business operator providing predetermined functions (services) to users of the terminal 30 and the device 40.

The information processing apparatus 10 calculates, for example, the predicted value and the actual value of the operation cost of the cloud service, for each of one or more functions to be provided to the user of the terminal 30 and the device 40.

The server 20 may be, for example, a server provided by a public cloud service operator. The server 20 may be a virtual computer (instance) in the cloud service. Further, the server 20 may be such that values of specifications of the CPU, the memory, and the storage size, or the like, can be specified by a business operator (a user of a public cloud service) providing predetermined functions (services) to users of the terminal 30 and the device 40.

The server 20A may be, for example, an instance of an API gateway service providing functions such as publishing of API (Application Programming Interface), authentication of the user of the terminal 30, routing, and the like.

The server 20B may be, for example, an instance of a service that executes a code (a program, a script, a compiled execution code) that is preset by the user of the public cloud service according to an event that has occurred.

The server 20C may be, for example, an instance of a database service. The server 20D may be, for example, an instance that provides IoT services for authentication, data acquisition, management, or the like, of Internet of Things (IoT) devices.

The terminal 30 may be, for example, an information processing terminal such as a smartphone, a tablet terminal, a personal computer or the like used by the user. The device 40 may be, for example, a device such as an edge server, an air conditioner, various sensors, or the like.

### <Hardware configuration>

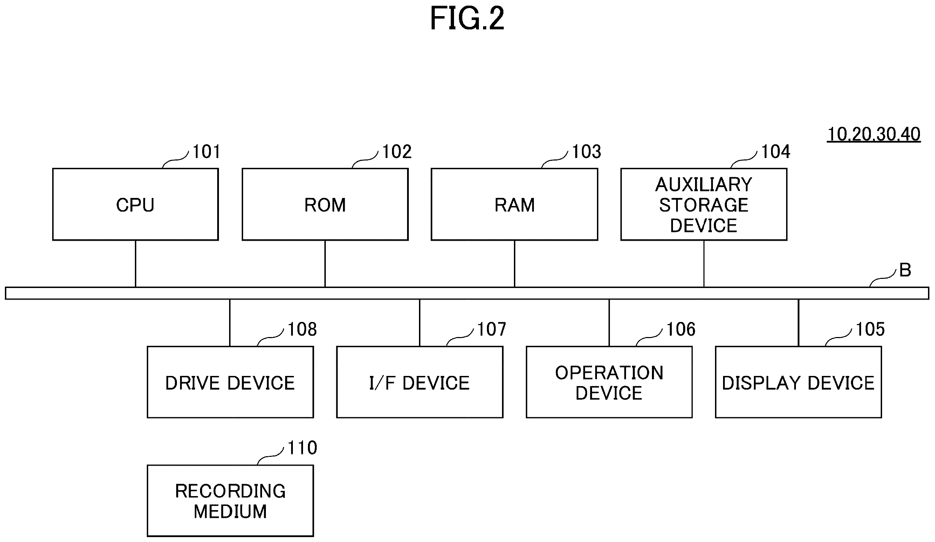

Next, the hardware configuration of the information processing apparatus 10, the server 20, the terminal 30, and the device 40 of the communication system 1 according to the embodiment will be described. FIG. 2 illustrates an example of the hardware configuration of the information processing apparatus 10, the server 20, the terminal 30, and the device 40 according to the embodiment. In the following, the information processing apparatus 10 will be described as an example. The hardware configuration of the server 20, the terminal 30, and the device 40 may be the same as that of the information processing apparatus 10.

As illustrated in FIG. 2, the information processing apparatus 10 includes a CPU (Central Processing Unit) 101, a ROM (Read Only Memory) 102, and a RAM (Random Access Memory) 103. Further, the information processing apparatus 10 includes an auxiliary storage device 104, a display device 105, an operation device 106, an I/F (Interface) device 107, and a drive device 108. Each hardware of the information processing apparatus 10 is connected to each other via a bus B.

The CPU 101 is an arithmetic device that executes various programs (e.g., machine learning programs, or the like) installed in the auxiliary storage device 104. The ROM 102 is a non-volatile memory. The ROM 102 functions as a main storage device and stores various programs, data and the like necessary for the CPU 101 to execute various programs installed in the auxiliary storage device 104. Specifically, the ROM 102 stores boot programs such as BIOS (Basic Input/Output System) and EFI (Extensible Firmware Interface).

The RAM 103 is a volatile memory such as DRAM (Dynamic Random Access Memory) or SRAM (Static Random Access Memory). The RAM 103 functions as a main storage device and provides a work area that is expanded when various programs installed in the auxiliary storage device 104 are executed by the CPU 101.

The auxiliary storage device 104 stores various programs and information used when various programs are executed.

The display device 105 is a display device for displaying various kinds of information. The operation device 106 is an operation device for receiving various operations. The I/F device 107 is a communication device that communicates with an external device.

The drive device 108 is a device for setting a recording medium 110. The recording medium 110 here includes media for recording information optically, electrically, or magnetically, such as a CD-ROM, a flexible disk, a magneto-optical disk, or the like. The recording medium 110 may include a semiconductor memory or the like for electrically recording information, such as a ROM, a flash memory, or the like.

Various programs installed in the auxiliary storage device 104 are installed, for example, when the distributed recording medium 110 is set in the drive device 108 and various programs recorded in the recording medium 110 are read by the drive device 108. Alternatively, various programs installed in the auxiliary storage device 104 may be installed by downloading the programs from a network that is not illustrated.

### functional configuration>

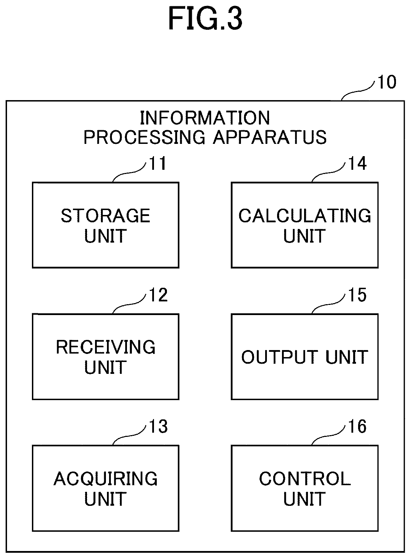

Next, referring to FIG. 3, the functional configuration of the information processing apparatus 10 according to the embodiment will be described. FIG. 3 illustrates an example of the functional configuration of the information processing apparatus 10 according to the embodiment.

### <<Information processing apparatus 10>>

The information processing apparatus 10 includes a storage unit 11, a receiving unit 12, an acquiring unit 13, a calculating unit 14, an output unit 15, and a control unit 16. These units may be implemented by cooperation between, for example, 1 or more programs installed in the information processing apparatus 10 and hardware such as the CPU 101 of the information processing apparatus 10.

The storage unit 11 stores various kinds of information. The receiving unit 12 receives various operations from the administrator. The acquiring unit 13 acquires information from an external device such as the server 20 and the storage unit 11.
The calculating unit 14 calculates the operation cost of the server 20. The output unit 15 displays information based on the operation cost calculated by the calculating unit 14 or the like. The output unit 15 may display information on the screen of an external device, for example. The control unit 16 controls each unit of the information processing apparatus 10.

### <Processing>

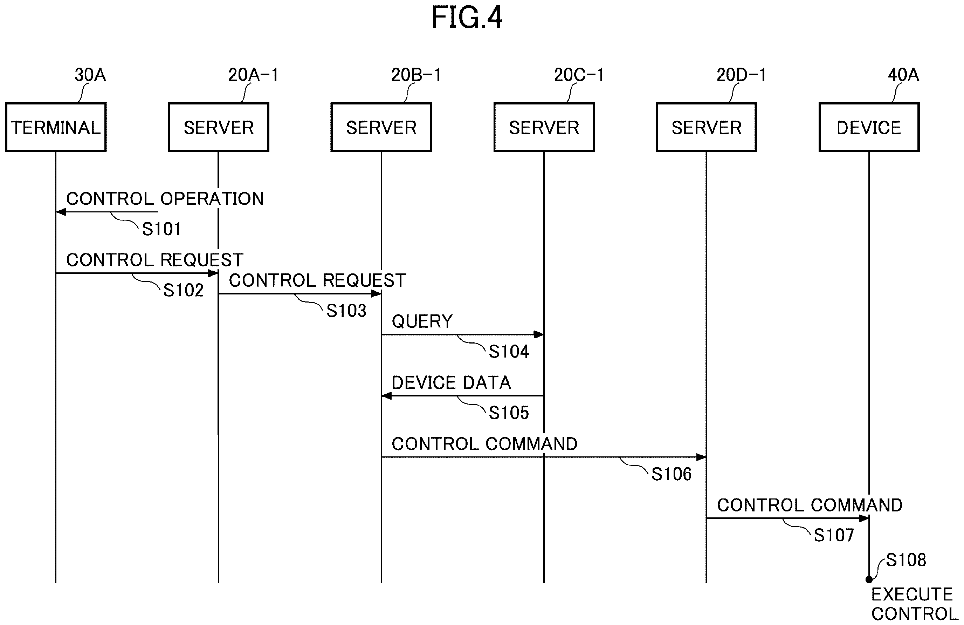

Next, an example of the processing of the communication system 1 according to the embodiment will be described with reference to FIGS. 4 to 11.

### <<Remote control>>

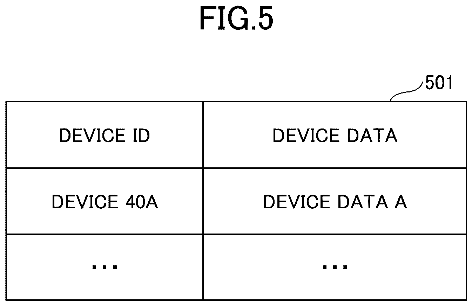

First, referring to FIGS. 4 and 5, an example of processing in providing the remote control function (an example of a "first function") will be described. FIG. 4 is a sequence diagram illustrating an example of processing in the remote control function according to the embodiment. FIG. 5 is a diagram for explaining an example of information stored in a device DB 501 according to the embodiment.

In step S101, the terminal 30A receives an operation to control the device 40A from the user A. Subsequently, the terminal 30A sends a control request corresponding to the operation to the server 20A-1 (step S102). Here, the terminal 30A may send a control request by, for example, HTTP (Hyper Text Transfer Protocol).

Subsequently, the server 20A-1 transfers the control request to the server 20B-1 that has responded to the received control request (step S103). Here, the server 20A-1 may determine the transfer destination of the control request based on, for example, the URL (Uniform Resource Locator) of the control request received from the terminal 30A.

Subsequently, based on the received control request, the server 20B-1 sends, to the server 20C-1, a request (search query) to acquire device data related to the device 40A stored in the device DB 501 (step S104).

Subsequently, the server 20C-1 transmits the requested device data to the server 20B-1 (step S105). Here, the server 20C-1 transmits the device data recorded in the device DB 501 of the server 20C-1 to the server 20B-1. In the example of FIG. 5, device data is recorded in the device DB 501 in association with a device ID. The device ID is the identification information of the device 40. The device data may include, for example, information indicating various states of the device 40. If the device 40 is an air conditioner, the device data may include information such as, for example, the set temperature of the air conditioner and the indoor temperature measured by the air conditioner.

Subsequently, the server 20B-1 transmits a control command corresponding to the data and the control request to the server 20D-1 (step S106).

Subsequently, the server 20D-1 sends the control command to the device 40A (step S107). Subsequently, the device 40A executes control according to the received control command (step S108). Thus, the user A of the terminal 30A can remotely perform operations such as raising the set temperature of the air conditioner by 1 degree Celsius.

### <<Remote monitor>>

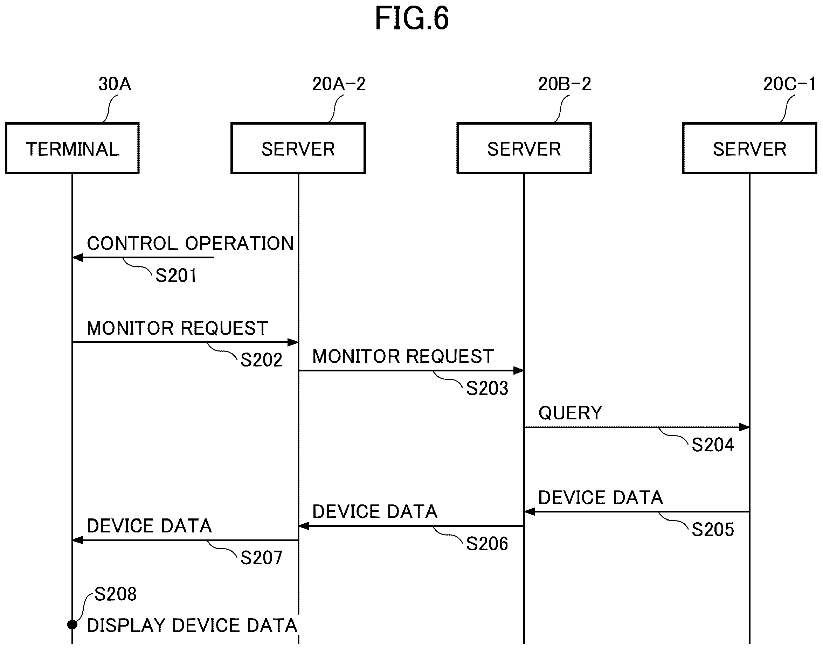

An example of processing in providing the remote monitor function (an example of a "second function") will be described with reference to FIGS. 5 and 6. FIG. 6 is a sequence diagram illustrating an example of processing in the remote monitor function according to the embodiment.

In step S201, the terminal 30A receives an operation from the user A to remotely monitor the device 40A. Subsequently, the terminal 30A sends a monitor request corresponding to the operation to the server 20A-2 (step S202). Here, the terminal 30A may send a monitor request by, for example, HTTP.

Subsequently, the server 20A-2 transfers the monitor request to the server 20B-2 that has responded to the received monitor request (step S203). Here, the server 20A-2 may determine the transfer destination of the monitor request based on, for example, the URL of the monitor request received from the terminal 30A.

Subsequently, based on the received monitor request, the server 20B-2 sends a request (query) to the server 20C-1 to acquire the device data of the device 40A stored in the device DB 501 (step S204). In the device DB 501 of the server 20C-1, the device data of the device 40A may be recorded at a predetermined timing by the server 20D or the like.

Subsequently, the server 20C-1 transmits the requested device data to the server 20B-2 (step S205). Here, the server 20C-1 transmits the device data recorded in the device DB 501 in association with the device ID of the device 40A to the server 20B-1.

Subsequently, the server 20B-2 transmits the device data to the server 20A-2 (step S206). Subsequently, the server 20A-2 transmits the device data to the terminal 30A (step S207). Subsequently, the terminal 30A displays the received device data on the screen (step S208). Thus, the user A of the terminal 30A can remotely identify, for example, the set temperature of the air conditioner, the room temperature, and the like.

### <<Calculating operation cost>>

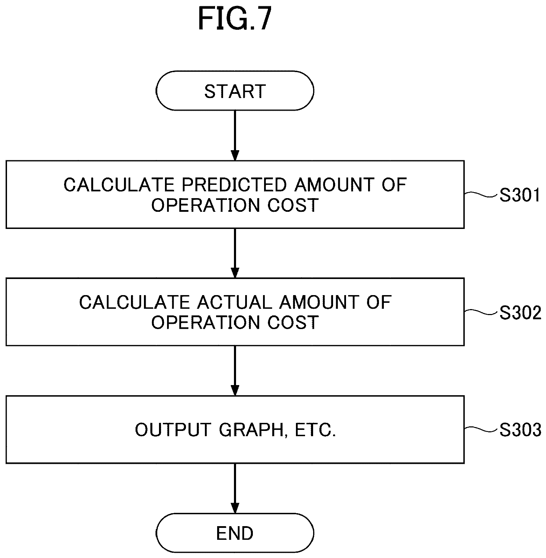

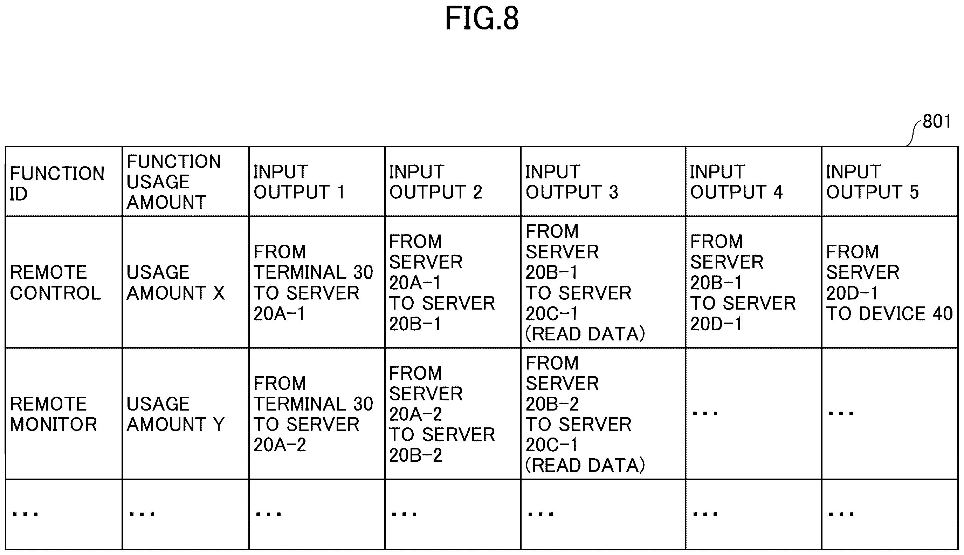

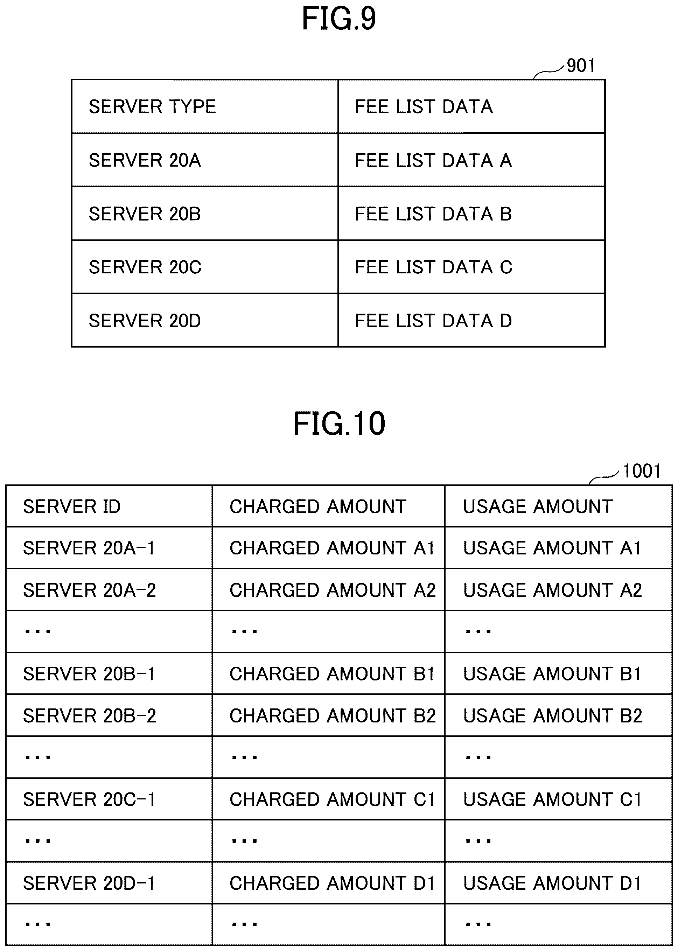

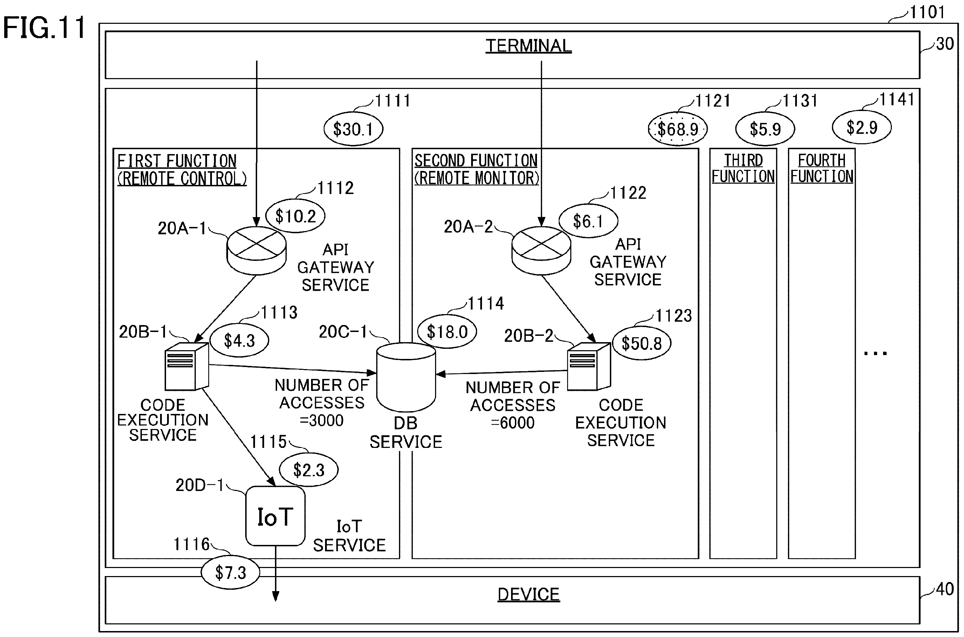

An example of the processing performed by the information processing apparatus 10 when calculating the operation cost (usage fee) of each server 20 will be described with reference to FIGS. 7 to 11. FIG. 7 is a flowchart illustrating an example of processing of the information processing apparatus 10 according to the embodiment. FIG. 8 is a diagram for explaining an example of the information included in design data 801 according to the embodiment. FIG. 9 is a diagram for explaining an example of the information included in fee list data 901 according to the embodiment. FIG. 10 is a diagram for explaining an example of the information included in actual data 1001 according to the embodiment. FIG. 11 is a diagram for explaining an example of the display screen of the information processing apparatus 10 according to the embodiment.

In step S301, the calculating unit 14 calculates the predicted amount of the operation cost of each server 20 based on the design data 801 and the fee list data 901. The design data 801 and the fee list data 901 may be set in advance in the storage unit 11 of the information processing apparatus 10 by, for example, an administrator's operation.

In the example of FIG. 8, in the design data 801, information indicating the function usage amount and the relationship of data input/output between each of the servers 20 are set in association with the function ID. The function ID is, for example, identification information of a function (service) provided to the user of the terminal 30 and the device 40. The function usage amount may be, for example, the predicted value of the number of times each function is used per month. In the example of FIG. 8, each of the server 20A-1, the server 20B-1, the server 20C-1, and the server 20D-1 is used once every time the "remote control" function is used once.

The calculating unit 14 may calculate the function usage amount based on at least one of the number of users and the number of devices using each function input by the administrator (the user of the information processing apparatus 10). In this case, the calculating unit 14 may calculate, for example, a value obtained by multiplying the input number by a predetermined coefficient set for each function, as the function usage amount of each function.

Further, the calculating unit 14 may determine the grade of each server 20 based on at least one of the number of users or the number of devices using each function input by the administrator, and calculate the predicted amount of the usage fee for using the cloud service used by each function, based on the information in the fee list of the determined grade. In this case, the calculating unit 14 may calculate, for example, a value obtained by multiplying the input number by a predetermined coefficient set for each function, as the function usage amount of each function. Then, the calculating unit 14 may estimate the usage amount of each server 20 based on the calculated function usage amount and information indicating the relationship of data input/output between each of the servers 20. Then, the calculating unit 14 may determine the grade of each server 20 based on the estimated usage amount and the data in the correspondence table associating the preset usage amount and the grade. The grade may be defined by a public cloud service provider according to specifications of the CPU, the memory, and the storage size, or the like, of the server 20, for example.

The example in FIG. 8 also illustrates that when data transmitted from the terminal 30 is received by the server 20A-1, data is transmitted from the server 20A-1 to the server 20B-1.

In the example of FIG. 9, in the fee list data 901, the data of each fee list is recorded in association with the server type. The server type corresponds to the service provided by the server 20. The fee list data 901 may be provided, for example, by a public cloud service provider. The fee of the server 20 may be set, for example, as a first amount (for example, 300 yen) per one million requests if the number of monthly requests is less than or equal to a threshold, or as a second amount (for example, 200 yen), which is less than the first amount, per one million requests if the number of monthly requests exceeds the threshold.

Subsequently, the calculating unit 14 calculates the actual amount of operation costs of each server 20 based on the actual data 1001 (step S302). Here, the actual data 1001 may be acquired from the server 20, for example, and recorded in advance in the storage unit 11 of the information processing apparatus 10.

In the example of FIG. 10, the actual data 1001 includes the charged amount and the usage amount for each server ID (resource ID, instance ID). The server ID is the identification information of each server 20. The charged amount is the usage fee (the actual value of the usage fee) for each server 20 charged by the public cloud service provider. The usage amount is information indicating the amount each server 20 is used by a user of the terminal 30 or the like. The usage amount may include information about the transmission source of the data.

In steps S301 and S302, the calculating unit 14 may calculate the usage fee for using the cloud service by each function based on information indicating the relationship of input/output between each of the servers 20 for each function.

In this case, first, the acquiring unit 13 may acquire, from the design data 801 or the actual data 1001, for example, information indicating the relationship of input/output between the servers 20A-1, 20B-1, 20C-1, and 20D-1 used in the "remote control" function. Further, the acquiring unit 13 may acquire, from the design data 801 or the actual data 1001, information indicating the relationship of input/output between the servers 20A-2, 20B-2, and 20C-1 used in the "remote monitor" function, for example.

Further, the acquiring unit 13 may, for example, calculate the predicted value of the usage amount of each server based on the function usage amount included in the design data 801 and information indicating the relationship of data input/output between each server 20. The acquiring unit 13 may use, for example, the usage amount of each server 20 included in the actual data 1001 as the actual value of the usage amount of each server.

Then, the calculating unit 14 may calculate the predicted value of the usage fee for using the cloud service by each function based on the information of the fee list of each server 20 included in the fee list data 901 and the predicted value of the usage amount of each server 20 by each function. Further, the calculating unit 14 may calculate the actual value of the usage fee for using the cloud service by each function based on the information of the fee list of each server 20 included in the fee list data 901 and the actual value of the usage amount of each server 20 by each function.

Further, the calculating unit 14 may calculate the usage fee for using the cloud service by each function based on the information indicating the relationship of input/output between each of the servers 20 used for each function and the usage fee of each server 20. In this case, the calculating unit 14 may, for example, allocate (prorate) the actual value of the usage fee of one of the servers 20 used for multiple functions, according to the usage amount of the corresponding server 20 for each function. For example, suppose that the actual value of the usage fee for the server 20C-1 that is commonly used for the "remote control" function and the "remote monitor" function is 300,000 yen, and that the server 20B-1 uses the server 20C-1 10,000 times for the "remote control" function, and the server 20B-2 uses the server 20C-1 20,000 times for the "remote monitor" function. In this case, the calculating unit 14 may calculate that the usage fee of the server 20C-1 for the "remote control" function is 100,000 yen (= 300,000 yen/30,000 times × 10,000 times) and that the usage fee of the server 20C-1 for the "remote monitor" function is 200,000 yen (= 300,000 yen/30,000 times × 20,000 times).

The calculating unit 14 may also calculate the usage fee for using the cloud service by the first function, based on the usage fee of each server 20 commonly used for the first function and the second function (hereafter, also referred to as "common service" as appropriate), the usage fee of each server 20 used for the first function, and the usage fee of each server 20 used for the second function. In this case, the calculating unit 14 may, for example, allocate (prorate) the actual value of the usage fee of one server 20 used by multiple functions, according to the actual value of the usage fee of the server 20 by each function. In this case, the calculating unit 14 may, for example, allocate the charged amount for services such as security monitoring and log monitoring, which are commonly used in multiple functions, according to the ratio of the total charged amount for each service used only in each function.

### (Addressing volume discounts)

Further, when the charged amount for the common service is charged according to a volume discount, i.e., charged based on a first unit price for a usage amount less than or equal to a first threshold and charged based on a second unit price that is lower than the first unit price for a portion of the usage amount of above the first threshold, the calculating unit 14 may perform the following processing.

When the usage amount of the common service exceeds the first threshold, the calculating unit 14 may calculate the reduced amount corresponding to the usage fee for using the first service by the second function that is reduced due to the first function, and output the calculated amount to the output unit 15. Thus, for example, the influence on the usage fee for using the second function, when the unprofitable first function is eliminated and the volume discount is reduced, can be identified.

Further, the calculating unit 14 may calculate the predicted amount of the usage fee for using the cloud service by the first function based on the second unit price, with respect to the portion in which the usage amount of the first service used by the first function and the second function exceeds the first threshold, among the usage amount of the common service used by the first function. Thus, for example, if the common service is volume-discounted by the first function, the amount subjected to the volume discount will be entirely allocated as that of the first function. Thus, for example, when deciding whether to eliminate the unprofitable first function, the cost when assuming that the first function is newly added can be identified.

### (Addressing free quota)

When the common service is a service that is not charged (free, no charge) for a usage amount less than or equal to the second threshold, the calculating unit 14 may calculate the increased amount corresponding to the usage fee for using the common service by the second function that is increased due to the first function when the usage amount of the common service exceeds the second threshold, and output the calculated amount to the output unit 15. Accordingly, for example, it is possible to identify the influence on the usage fee of the second function, when the unprofitable first function is eliminated and the free quota is not consumed by the first function.

In the case where the common service is a service for which the usage amount less than or equal to the second threshold is not charged and the portion of the usage amount exceeding the second threshold is charged by a third unit price, the calculating unit 14 may calculate the predicted amount of the usage fee for using the cloud service by the first function, based on the third unit price, with respect to the portion of the usage amount of the common service used by the first function and the second function exceeding the second threshold, among the usage amount of the common service used by the first function. In this way, any free quota will be allocated for the first function. Therefore, for example, when deciding whether to eliminate a second function that is not profitable, the cost in the case where a second function is considered to be newly added can be identified.

Subsequently, the output unit 15 displays a graph or the like on the screen based on the data calculated by the calculating unit 14 (step S303). Here, the output unit 15 may output a warning when the predicted value or the actual value of the usage fee for using the cloud service by the first function, calculated by the calculating unit 14, is greater than or equal to the threshold corresponding to the first function. Thus, for example, a business operator providing a predetermined function to the users of the terminal 30 and the device 40 can ascertain that the operation cost by the first function exceeds the allowable limit amount.

In the example of FIG. 11, the output unit 15 displays a system configuration diagram illustrating the relationship of input/output between each of the servers 20 used by each function on the display screen 1101 based on the design data 801. Further, operation costs 1111 to 1114 for each function and operation costs 1112 to 1115, 1122, and 1123 for each server 20 used for each function, are displayed.

In the example of FIG. 11, it is illustrated that the operation costs 1112 and 1113 for the server 20A-1 and the server 20B-1 used only for the "remote control" function are "10.2" dollars and "4.3" dollars, respectively. It is also illustrated that the operation cost 1115 corresponding to the usage amount of the server 20D-1 used in the "remote control" function, and the operation cost 1116 corresponding to the usage amount of messages transmitted outside by the server 20D-1 are "2.3" dollars and "7.3" dollars, respectively.

Further, it is illustrated that the operation costs 1122 and 1123 for the server 20A-2 and the server 20B-2 used for the "remote monitor" function only are "6.1" dollars and "50.8" dollars, respectively.

Further, it is illustrated that the operation cost 1114 of the server 20C-1 (common service) commonly used for the "remote control" function and the "remote monitor" function is "18.0" dollars. Further, it is illustrated that the server 20B-1 has accessed the server 20C-1 3000 times (number of requests, usage amount), and the server 20B-2 has accessed the server 20C-1 6000 times.

Further, it is illustrated that the operation cost 1114 "18.0" dollars is allocated according to the value of the ratio of the number of accesses by each function, and the operation cost 1111 for the "remote control" function is calculated as "30.1" dollars, and the operation cost 1121 for the "remote monitor" function is calculated as "68.9" dollars. Further, the object indicating the operation cost 1121 is displayed in a predetermined display mode (for example, red) that is different from the regular display mode, thereby notifying the administrator of the warning.

Further, if the usage fee for using the cloud service by the first function calculated by the calculating unit 14 is greater than or equal to the threshold corresponding to the first function, the output unit 15 may present the configuration (grade) of each server 20 for which the usage fee for using the cloud service by the first function becomes less than the threshold. In this case, the output unit 15 may, for example, determine and output the grade of each server 20 for which the predicted amount of the usage fee for using the cloud service charge by the first function becomes less than the threshold, based on the information in the fee list of each grade of each server 20 used by the first function. Thus, for example, a business operator providing a predetermined function to the users of the terminal 30 and the device 40 can identify the grade of the server 20 for which the operation cost by the first function does not exceed the allowable limit amount.

Further, the output unit 15 may output a warning when the rate of deviation between the actual amount of the cloud service by the first function calculated by the calculating unit 14 and the predicted amount is greater than or equal to the threshold. In this case, the output unit 15 may output a warning if, for example, the value of the ratio between the actual amount and the predicted amount is greater than or equal to the threshold.

### <Modified example>

Each functional unit of the information processing apparatus 10 may be implemented by cloud computing executed by, for example, 1 or more computers. In this case, for example, the calculation of operation costs or the like may be performed by the calculating unit 14 on the cloud, and the result may be displayed on the terminal.

As described above, it will be understood that various changes in the form and details are possible without departing from the purpose and scope of the claims.

This international application claims priority under Japanese Patent Application No. 2020 098354, filed on June 5, 2020, the entire contents of No. 2020-098354 are hereby incorporated herein by reference.

### [Reference Signs List]

1 communication system
10 information processing apparatus
11 storage unit
12 receiving unit
13 acquiring unit
14 calculating unit
15 output unit
16 control unit
20 server
30 terminal
40 device

## Claims

1. A program that causes a computer to execute a calculating process of calculating a usage fee for using a cloud service by at least one of a first function or a second function, based on
first information indicating a relationship of input/output between a first service and a second service that are used by the first function and provided by the cloud service, and
second information indicating a relationship of input/output between the first service and a third service that are used by the second function and provided by the cloud service.

2. The program according to claim 1, wherein the calculating process includes
calculating the usage fee for using the cloud service by the first function, based on the first information, the second information, and a usage fee for using each of multiple services provided by the cloud service.

3. The program according to claim 1 or 2, wherein the calculating process includes
calculating the usage fee for using the cloud service by the first function, based on information of a fee list of each of the first service and the second service, and a usage amount of each of the first service and the second service used by the first function.

4. The program according to any one of claims 1 to 3, wherein the calculating process includes
calculating the usage fee for using the cloud service by the first function, based on a usage fee for using the first service, a usage amount of the first service used by the first function, and a usage amount of the first service used by the second function.

5. The program according to any one of claims 1 to 4, wherein the calculating process includes
calculating the usage fee for using the cloud service by the first function, based on
a usage fee for using the first service,
a usage fee for using the second service by the first function, and
a usage fee for using the third service by the second function.

6. The program according to any one of claims 1 to 5, wherein the program causes the computer to execute an output process of outputting a warning, in response to determining that the calculated usage fee for using the cloud service by the first function is greater than or equal to a threshold.

7. The program according to any one of claims 1 to 6, wherein the program causes the computer to execute a presenting process of presenting a configuration of the second service by which the usage fee for using the cloud service by the first function becomes less than a threshold, in response to determining that the calculated usage fee for using the cloud service by the first function is greater than or equal to the threshold.

8. The program according to any one of claims 1 to 7, wherein the calculating process includes
calculating a predicted usage fee of the usage fee for using the cloud service by the first function, based on at least one of a number of users or a number of devices using the first function input by a user, and information of a fee list of each of the first service and the second service.

9. The program according to claim 8, wherein the calculating process includes
determining a grade of at least one of the first service or the second service, based on at least one of the number of users or the number of devices using the first function input by the user, and calculating the predicted usage fee of the usage fee for using the cloud service by the first function, based on the information of the fee list of the determined grade.

10. The program according to any one of claims 1 to 9, wherein the program causes the computer to execute an output process of outputting a warning, in response to determining that a rate of deviation between a calculated actual usage fee and a predicted usage fee of the usage fee for using the cloud service by the first function, is greater than or equal to a threshold.

11. The program according to any one of claims 1 to 10, wherein
the first service is charged based on a first unit price with respect to a usage amount that is less than or equal to a first threshold, and is charged based on a second unit price that is lower than the first unit price with respect to a portion of the usage amount exceeding the first threshold, and
the program causes the computer to execute an output process of outputting information based on a reduced fee corresponding to a usage fee for using the first service by the second function that is reduced due to the first function, in response to determining that a usage amount of the first service used by the first function and the second function exceeds the first threshold.

12. The program according to any one of claims 1 to 11, wherein
the first service is charged based on a first unit price with respect to a usage amount that is less than or equal to a first threshold, and is charged based on a second unit price that is lower than the first unit price with respect to a portion of the usage amount exceeding the first threshold, and
the calculating process includes
calculating a predicted usage fee of the usage fee of using the cloud service by the first function, based on the second unit price, with respect to a portion of a usage amount exceeding the first threshold of the first service used by the first function and the second function, among a usage amount of the first service used by the first function.

13. The program according to any one of claims 1 to 12, wherein
the first service is not charged with respect to a usage amount that is less than or equal to a second threshold, and
the program causes the computer to execute an output process of outputting information based on an increased fee corresponding to a usage fee for using the first service by the second function that is increased due to the first function, in response to determining that a usage amount of the first service used by the first function and the second function exceeds the second threshold.

14. The program according to any one of claims 1 to 13, wherein
the first service is not charged with respect to a usage amount that is less than or equal to a second threshold, and is charged based on a third unit price with respect to a portion of the usage amount that exceeds the second threshold, and
the calculating process includes
calculating a predicted usage fee of the usage fee of using the cloud service by the first function, based on the third unit price, with respect to the portion of a usage amount exceeding the second threshold of the first service used by the first function and the second function, among a usage amount of the first service used by the first function.

15. An information processing method performed by an information processing apparatus, to execute a calculating process of calculating a usage fee for using a cloud service by at least one of a first function or a second function, based on
first information indicating a relationship of input/output between a first service and a second service that are used by the first function and provided by the cloud service, and
second information indicating a relationship of input/output between the first service and a third service that are used by the second function and provided by the cloud service.

16. An information processing apparatus comprising:
a calculating unit configured to calculate a usage fee for using a cloud service by at least one of a first function or a second function, based on
first information indicating a relationship of input/output between a first service and a second service that are used by the first function and provided by the cloud service, and
second information indicating a relationship of input/output between the first service and a third service that are used by the second function and provided by the cloud service.
